(19) Europäisches Patentamt
European Patent Office
Office européen des brevets

(11) **EP 3 553 859 A1**

(12) **EUROPEAN PATENT APPLICATION**
published in accordance with Art. 153(4) EPC

(43) Date of publication:
**16.10.2019 Bulletin 2019/42**

(21) Application number: **17877715.7**

(22) Date of filing: **06.12.2017**

(51) Int Cl.:
**H01M 8/026** (2016.01)    **H01M 8/10** (2016.01)
**H01M 8/18** (2006.01)

(86) International application number:
**PCT/JP2017/043791**

(87) International publication number:
**WO 2018/105648 (14.06.2018 Gazette 2018/24)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**MA MD TN**

(30) Priority: **06.12.2016 JP 2016236720**

(71) Applicant: **Showa Denko K.K.
Tokyo 105-8518 (JP)**

(72) Inventors:
• **ICHIKAWA Masatoshi
Tokyo 105-8518 (JP)**
• **ISEKI Keizo
Tokyo 105-8518 (JP)**
• **HANAWA Kenzo
Tokyo 105-8518 (JP)**

(74) Representative: **Strehl Schübel-Hopf & Partner
Maximilianstrasse 54
80538 München (DE)**

(54) **COLLECTOR PLATE AND REDOX FLOW BATTERY**

(57)    This collector plate includes a plurality of flow paths through which an electrolyte is capable of flowing, and which are provided in at least one surface of the collector plate, in which a surface roughness (RaT) of a first surface of an internal wall regulated between the plurality of flow paths, which is measured along a width direction of the internal wall, is smaller than a surface roughness (RaL) of the first surface which is measured along a length direction of the internal wall.

FIG. 4

**Description**

TECHNICAL FIELD

The present invention relates to a collector plate and a redox flow battery.
The present application claims priority on Japanese Patent Application No. 2016-236720 filed on December 6, 2016, the content of which is incorporated herein by reference.

BACKGROUND ART

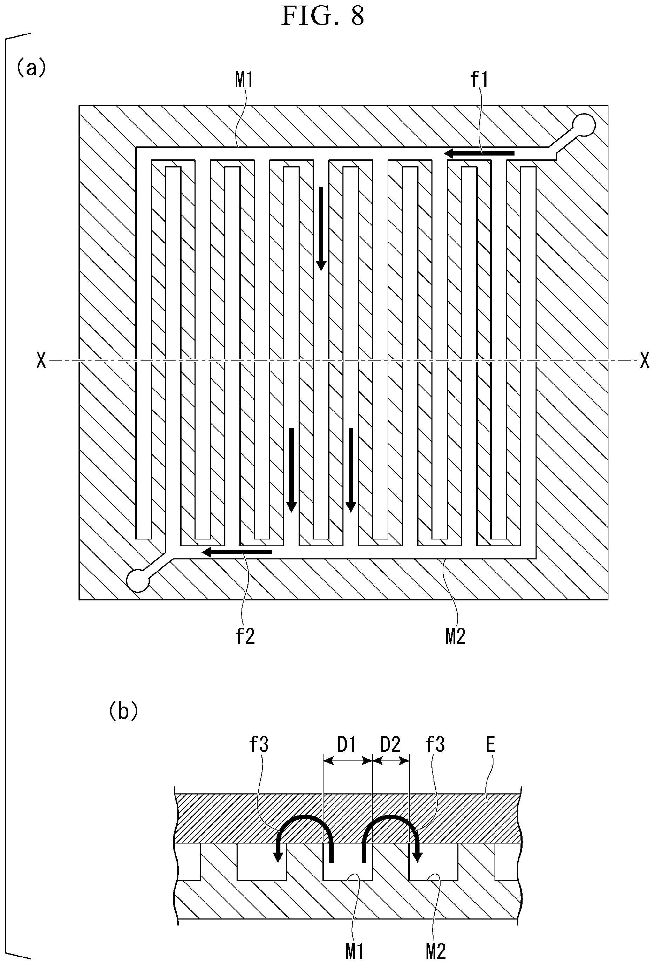

A redox flow battery is known as a high-capacity storage battery. Typically, the redox flow battery includes an ion-exchange membrane that separates an electrolyte, and electrodes that are provided on both sides of the ion-exchange membrane. An oxidation reaction and a reduction reaction simultaneously progress on the electrodes, and thus, the redox flow battery is charged and discharged.
In the redox flow battery, the electrode is stored in an electrode compartment. The redox flow battery operates while the electrolyte is supplied to the electrode compartment and the electrolyte is circulated. Ions in the electrolyte give electrons to the electrodes, and the electrons are transferred to the outside of the redox flow battery. At this time, protons are transferred to the other electrode compartment via the ion-exchange membrane. The redox flow battery is charged and discharged by this flowing of the electrons and the protons.
For example, in Patent Documents 1 and 2, flow paths of an electrolyte are formed in a collector plate, and thus, a decrease in internal resistance is realized. FIG. 8 is a view of the flow paths provided in a redox flow battery shown in Patent Documents 1 and 2, (a) is a plan view, and (b) is a cross-sectional view of main elements as the redox flow battery is cut along an X-X plane.
The redox flow battery shown in FIG. 8 includes a first comb-shaped flow path M1 connected with an inlet port, and a second comb-shaped flow path M2 connected with an outlet port. The first comb-shaped flow path M1 is filled with the electrolyte supplied from the inlet port (flow f1), and then the electrolyte flows to the second comb-shaped flow path M2, and is exhausted from the outlet port along the second comb-shaped flow path M2 (flow f2). As shown in FIG. 8(b), the electrolyte flows between the first comb-shaped flow path M1 and the second comb-shaped flow path M2 via an electrode E (flow f3).
In the redox flow battery shown in FIG. 8, the state of electrolyte supply is not uniform in a plane (in-plane direction) of the electrode E. Specifically, as shown in FIG. 8(b), the state of electrolyte supply differs between a first region (portion) D1 directly above the first comb-shaped flow path M1 and a second region (portion) D2 between the first comb-shaped flow path M1 and the second comb-shaped flow path M2.
A difference in the state of electrolyte supply in the plane of the electrode becomes a factor to increase cell resistance of the redox flow battery. The reason is that the entire surface of the electrode cannot be used to the maximum at charging and discharging. Therefore, the redox flow battery requires a configuration where the electrolyte can be uniformly supplied to the electrode in an in-plane direction.

PRIOR ART DOCUMENTS

Patent Documents

Patent Document 1: Japanese Unexamined Patent Application, First Publication No. 2015-122231
Patent Document 2: Published Japanese Translation No. 2015-505147 of the PCT International Publication

DISCLOSURE OF THE INVENTION

Problems to be Solved by the Invention

The present invention has been made in light of the problem, and an object of the present invention is to obtain a redox flow battery in which an electrolyte can be supplied to the entire surface in an in-plane direction.

Solutions for Solving the Problems

The inventors of the present invention have found that in the case where a surface of an internal wall provided in an electrode compartment is designed to have a feature for making a difference in ease to flow of an electrolyte, the electrolyte can be promoted to flow to an upper portion of the internal wall (surface of the internal wall on an electrode side), and the electrolyte can diffuse to the entire surface of the electrode in an in-plane direction.

That is, the present invention provides a collector plate and a redox flow battery hereinbelow to solve the problem.

(1) According to one aspect of the present invention, there is provided a collector plate including a plurality of flow paths through which an electrolyte is capable of flowing, and which are provided in at least one surface of the collector plate, in which a surface roughness (RaT) of a first surface of an internal wall regulated between the plurality of flow paths, which is measured along a width direction of the internal wall, is smaller than a surface roughness (RaL) of the first surface which is measured along a length direction of the internal wall.

(2) In the collector plate of the aspect, the surface roughness (RaT) of the first surface of the internal wall, which is measured along the width direction of the internal wall, may be in a range of 0.1 $\mu$m to 10 $\mu$m.

(3) In the collector plate of the aspect, protrusions and recessions may be provided in the first surface of the internal wall to promote a flow of the electrolyte, and the protrusions and recessions may be formed in a direction intersecting the width direction of the internal wall.

(4) In the collector plate of the aspect, the protrusions and recessions may be a plurality of diffusion promoting grooves extending in the width direction of the internal wall.

(5) In the collector plate of the aspect, a depth of the diffusion promoting groove may be in a range of 50 $\mu$m to 500 $\mu$m.

(6) In the collector plate of the aspect, a width of the diffusion promoting groove may be in a range of 50 $\mu$m to 500 $\mu$m.

(7) According to another aspect of the present invention, there is provided a redox flow battery including an ion-exchange membrane; the collector plate of the aspect; and electrodes disposed between the ion-exchange membrane and the current collector, in which the collector plate is disposed in such a manner that the first surface faces the electrode.

Effects of the Invention

According to the collector plate of one aspect of the present invention, in the redox flow battery, the electrolyte can diffuse to the entire surface of the electrode in the in-plane direction.

BRIEF DESCRIPTION OF THE DRAWINGS

FIG. 1 is a schematic cross-sectional view of a redox flow battery of a first embodiment.
FIG. 2 is a plan view of a collector plate stored in a cell frame of the redox flow battery of the first embodiment as seen in a stacking direction.
FIG. 3 is a schematic cross-sectional view of the collector plate as the redox flow battery of the first embodiment is cut along an A-A plane in FIG. 2.
FIG. 4 is a schematic perspective magnified view of main elements of the collector plate of the redox flow battery of the first embodiment.
FIG. 5 is a schematic perspective magnified view of main elements in another example of the collector plate of the redox flow battery of the first embodiment.
FIG. 6 is a schematic cross-sectional view as the redox flow battery of the first embodiment is cut along the A-A plane in FIG. 2.
FIG. 7 is a view showing a flow of an electrolyte in the redox flow battery of the first embodiment.
FIG. 8 is a view of flow paths provided in a redox flow battery disclosed in Patent Documents 1 and 2, (a) is a plan view, and (b) is a cross-sectional view of main elements as the redox flow battery is cut along an X-X plane.

EMBODIMENTS FOR CARRYING OUT THE INVENTION

A redox flow battery will be described hereinbelow in detail with proper reference to the drawings. In the drawings referenced in the description hereinbelow, characteristic parts may be magnified for an illustrative purpose for easy understanding of characteristics of the present invention, and a dimension ratio of each configuration element may differ from an actual value. Materials and dimensions provided in the description hereinbelow are simply exemplary examples, and the present invention is not limited thereto. Modifications can be appropriately made without departing from requirements (features) of the present invention.

(First Embodiment)

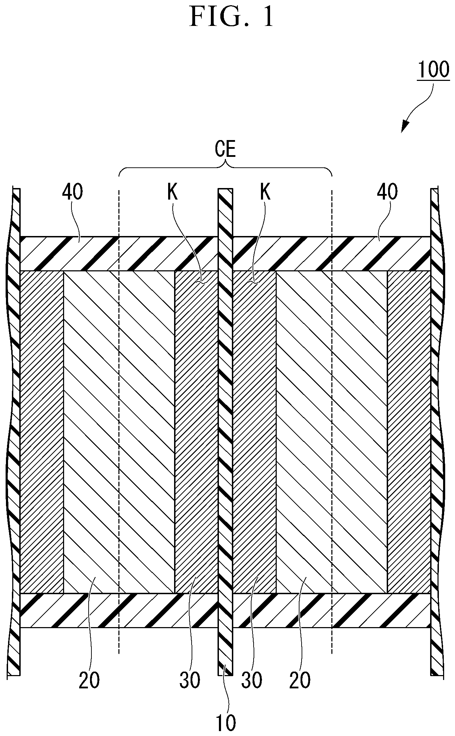

FIG. 1 is a schematic cross-sectional view of a redox flow battery of a first embodiment.

A redox flow battery 100 shown in FIG. 1 includes: an ion-exchange membrane 10; collector plates 20; and electrodes 30. The collector plates 20 and the electrodes 30 are surrounded by a cell frame 40. The electrode 30 is provided in an electrode compartment K formed by the ion-exchange membrane 10, the collector plate 20, and the cell frame 40. An electrolyte supplied to the electrode compartment K is prevented from leaking to the outside by the cell frame 40.

The redox flow battery 100 shown in FIG. 1 has a cell-stack structure where a plurality of cells CE are stacked on top of each other. The number of stacks of the cells CE can be appropriately changed depending on applications, and only a single cell may be provided. In the case where the plurality of cells CE are connected together in series, a practical voltage is obtained. One cell CE includes the ion-exchange membrane 10; two electrodes 30 servings as a positive electrode and a negative electrode between which the ion-exchange membrane 10 is interposed; and the collector plates 20 between which the two electrodes 30 are interposed.

Hereinbelow, a stacking direction of the cell-stack structure where the cells CE are stacked on top of each other may be simply referred to as a "stacking direction", and the direction of a plane vertical to the stacking direction of the cell-stack structure may be simply referred to as an "in-plane direction".

"Ion-exchange Membrane"

A cation-exchange membrane can be preferably used as the ion-exchange membrane 10. Specifically, examples of the material of the ion-exchange membrane 10 include a perfluorocarbon polymer having a sulfo group, a hydrocarbon-based polymer compound having a sulfo group, a polymer compound doped with an inorganic acid such as phosphoric acid, an organic/inorganic hybrid polymer in which a part thereof is substituted with a proton-conductive functional group, and a proton conductor in which a polymer matrix is impregnated with a phosphoric acid solution or a sulfuric acid solution. Among the materials, a perfluorocarbon polymer having a sulfo group is preferably used, and a Nafion (registered trademark) is more preferably used.

"Collector plate"

The collector plate 20 is a current collector having the function of transferring electrons to or from the electrode 30. In the case where both surfaces of the collector plate 20 can be used as a current collector, the collector plate 20 may be referred to as a bipolar plate. The collector plate of the embodiment is more preferably used in a redox flow battery.

The collector plate 20 can be made from a material having conductivity. A conductive material containing carbons can be used. Specifically, examples of the material include conductive resin consisting of graphite and an organic polymer compound, conductive resin in which a part of graphite is substituted with at least one of a carbon black and a diamond-like carbon, a mold material obtained by kneading carbon and resin. Among the materials, a mold material obtained by kneading carbon and resin and molding the kneaded product is preferably used.

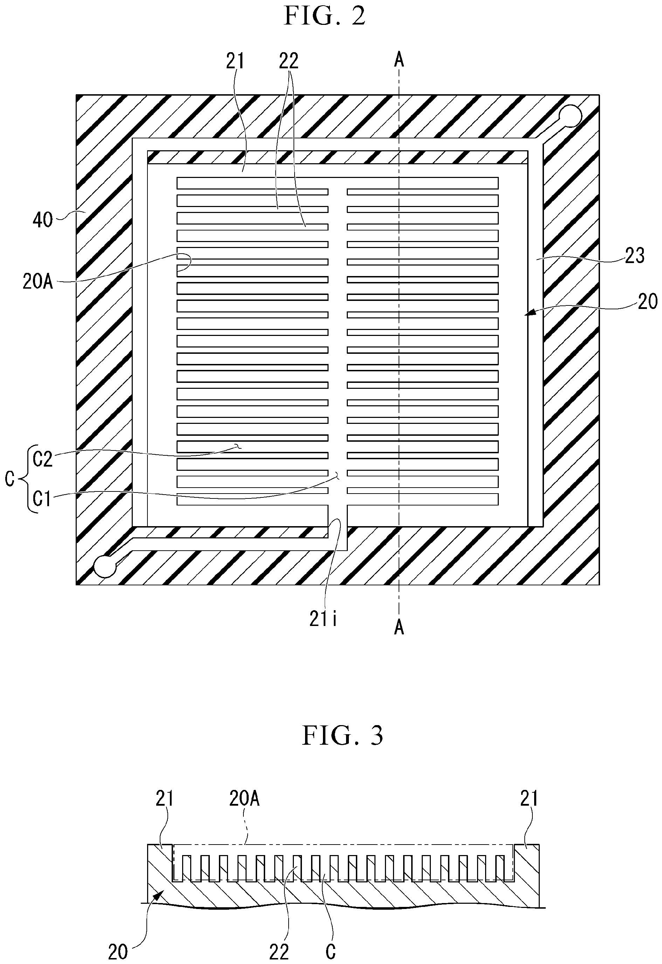

FIG. 2 is a plan view of the collector plate 20 stored in the cell frame 40 as seen in the stacking direction.

A plurality of flow paths C are provided on a surface of the collector plate 20 positioned on the side of the ion-exchange membrane 10 (the ion-exchange membrane 10 side surface). A wall portion (internal wall 22) is provided at a position between grooves of the plurality of flow paths C. It is also referred that a plurality of the internal walls 22 are provided, and the flow path C is formed between the internal walls 22. A recessed region (portion) 20A is formed on the surface of the collector plate 20 positioned on the side of the ion-exchange membrane 10 (the ion-exchange membrane 10 side surface). FIG. 3 is a schematic cross-sectional view of the collector plate as the redox flow battery of the first embodiment is cut along an A-A plane in FIG. 2. As shown in FIG. 3, the recessed region 20A includes the flow paths C and a region into which a first electrode 31 (will be described later) is fitted. A peripheral edge wall 21 may be provided on one surface of the collector plate 20, and the peripheral edge wall 21 defines the recessed region 20A. An electrolyte is supplied from an opening portion 21i of the peripheral edge wall 21 into the recessed region 20A surrounded by the peripheral edge wall 21.

It is preferable that the electrolyte supplied from the opening portion 21i of the peripheral edge wall 21 diffuses throughout the recessed region 20A, and then is exhausted from an exhaust path 23. Because the electrolyte diffuses throughout the recessed region 20A in the in-plane direction, the entire surface of the electrode 30 in the in-plane direction can be used. As a result, the cell resistance of the redox flow battery decreases, and charge and discharge characteristics are improved.

The internal walls 22 form the flow paths C through which the electrolyte flows in the recessed region 20A. Because the internal walls 22 are provided, the electrolyte is easily supplied throughout the recessed region 20A. The shape of the flow path C and the shape of the internal wall 22 regulated by the plurality of flow paths C are not limited to a specific shape.

The internal walls 22 shown in FIG. 2 include a first flow path C1 that is a part of the flow path C extending from the opening portion 21i in one direction, and second flow paths C2 that are connected with the first flow path C1 and branch from the first flow path C1 in a direction intersecting the first flow path C1. The supplied electrolyte flows along the first flow path C1, and diffuses in the second flow paths C2. That is, the electrolyte easily diffuses in the recessed region 20A in the in-plane direction.

The configuration of the collector plate 20 is not limited to the configuration shown in FIG. 2, and the collector plate 20 can have various configurations.

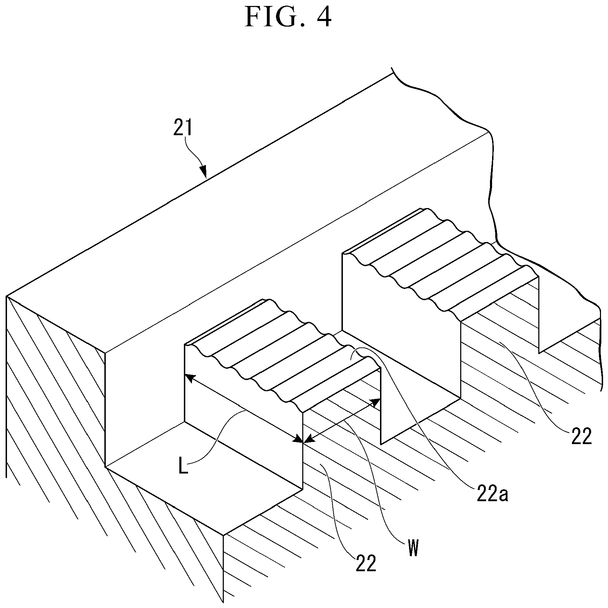

FIG. 4 is a perspective magnified view of main elements of the collector plate 20. As shown in FIG. 4, a first surface 22a of an internal wall 22 (exposed surface on the side (upper side in FIG. 4) of one surface of the internal wall between a plurality of the flow paths) is a surface disposed on the side of the ion-exchange membrane 10. The first surface 22a of the internal wall 22 is also referred to as a surface that is positioned toward the stacking direction, and faces the electrode 30. In FIG. 4, the flow path C between the internal walls 22 is shown to have a rectangular cross-sectional shape. The flow path C may have a semicircular or triangular cross-sectional shape.

As shown in FIG. 4, the first surface 22a of the internal wall 22 is provided with protrusions and recessions promoting a flow of the electrolyte. The protrusions and recessions are formed in a direction intersecting the direction of a width W of the internal wall 22. In FIG. 4, the protrusions and recessions of the first surface 22a are lines of protrusions and recessions or streaky grooves.

In the case where the protrusions and recessions are cyclically formed in the first surface 22a of the internal wall 22 in the direction intersecting the direction of the width W, the electrolyte is supplied onto the first surface 22a of the internal wall 22 along the protrusions and recessions in the direction of the width W of the internal wall 22.

The first surface 22a of the internal wall 22 may not necessarily have a pattern of protrusions and recessions. The surface roughness (RaT) of the first surface 22a of the internal wall 22 which is measured along the direction of the width W of the internal wall 22 may be smaller than the surface roughness (RaL) measured along the direction of a length L of the internal wall 22. The surface roughness is an arithmetic surface roughness measured based on JIS B0601. The arithmetic surface roughness (Ra) is also referred to as a mean surface roughness or a surface roughness.

A measurement length of the surface roughness is set to half the width W in the direction of the width W of the internal wall 22, and is set to 2 mm in the direction of the length L. The surface roughness is an average value of surface roughnesses measured at any five arbitrary points.

In the configuration, the electrolyte easily flows on the first surface 22a of the internal wall 22 in the direction of the width W. The length of the internal wall 22 in the direction of the width W is shorter than the length in the direction of the length L. For this reason, electrolyte supply flows are produced on the first surface 22a of the internal wall 22 in the direction of the width W, and thus the electrolyte can be efficiently supplied onto the first surface 22a of the internal wall 22.

The concrete value of the surface roughness (RaT) of the first surface 22a of the internal wall 22 which is measured along the direction of the width W of the internal wall 22 is preferably in a range of 0.1 $\mu$m to 10 $\mu$m, and more preferably in a range of 0.3 $\mu$m to 5 $\mu$m. The concrete value of the surface roughness (RaL) which is measured along the direction of the length L of the internal wall 22 is preferably in a range of 15 $\mu$m to 500 $\mu$m, and more preferably in a range of 30 $\mu$m to 300 $\mu$m.

In the case where the first surface 22a of the internal wall 22 has a predetermined surface roughness, a proper size of gap can be formed between the electrode 30 and the internal wall 22, the electrolyte can be supplied to the gap between the internal wall 22 and the electrode.

The redox flow battery is assembled by stacking the collector plates 20, the electrodes 30, and the ion-exchange membrane 10 on top of each other which are separate members, and interposing the collector plates 20, the electrodes 30, and the ion-exchange membrane 10 between themselves in the stacking direction. For this reason, during an assembly process, the position of the electrode 30 may shift relative to the position of the collector plate 20 in the in-plane direction. In the case where the position of the electrode 30 shifts relative to the position of the collector plate 20, the electrolyte flows out without passing through the electrode 30, and charge and discharge capacity of the redox flow battery decreases.

In the case where the first surface 22a of the internal wall 22 has the predetermined surface roughness, the positioning of the electrode 30 during the assembly of the redox flow battery becomes stable. That is, a decrease in the charge and discharge capacity of the redox flow battery is prevented.

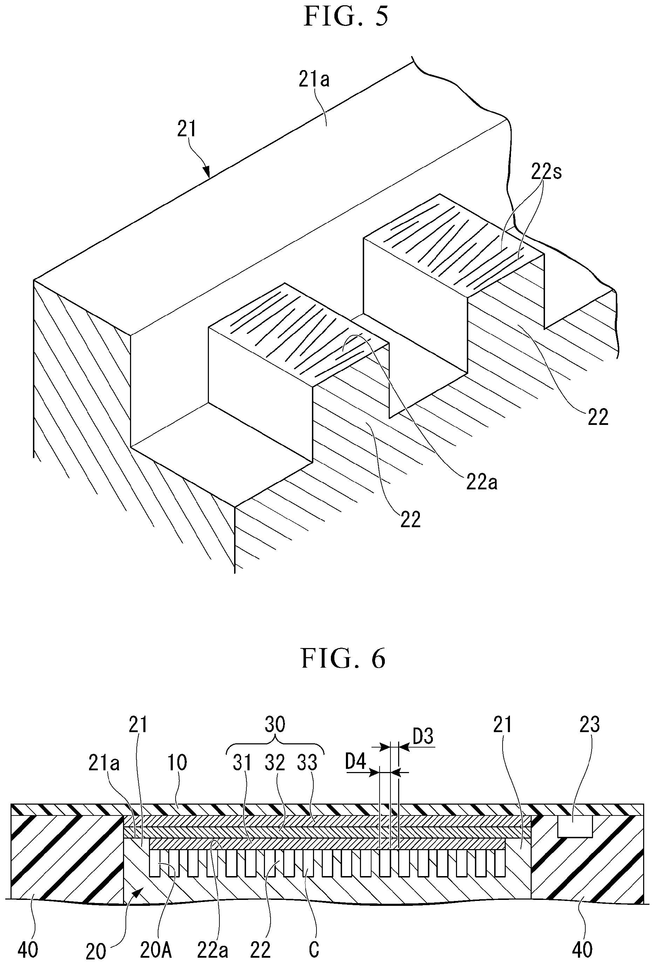

As shown in FIG. 5, as the protrusions and recessions of the first surface 22a of the internal wall 22, a plurality of diffusion promoting grooves 22s may be provided to extend along the width direction of the internal wall 22 without being subjected to a complex process. It is possible to easily form the diffusion promoting grooves 22s only by scratching the first surface 22a of the internal wall 22. Specifically, it is possible to form the protrusions and recessions by moving an abrasive with projections on the first surface 22a of the internal wall 22 in the width direction of the internal wall while keeping the abrasive in contact with the first surface 22a.

The length of the diffusion promoting groove 22s is preferably greater than or equal to 0.05 mm, more preferably greater than or equal to 0.1 mm, and further more preferably greater than or equal to 0.3 mm.

The width of the diffusion promoting groove 22s is preferably shorter than the length of the groove 22s. The width is preferably less than or equal to half the length, and more preferably less than or equal to one third the length. Specifically, the width is preferably in a range of 50 $\mu$m to 500 $\mu$m.

The depth of the diffusion promoting groove 22s is preferably 0.1 to 2 times the width, more preferably 0.3 to 1.5 times the width, and further more preferably 0.5 to 1.2 times the width. Specifically, the depth is preferably in a range of 50 $\mu$m to 500 $\mu$m.

In the case where each of the length, width, and depth of the groove 22s is set to be in the above-described range, the electrolyte more easily enters the grooves 22s and diffuses in the grooves 22s. As a result, the electrolyte is also easily supplied to a first region D3 (will be described later) of the electrode 30 positioned directly above the internal wall 22.

It is possible to obtain the length, width, and depth of the diffusion promoting groove 22s by averaging lengths, widths, and depths of twenty arbitrary diffusion promoting grooves 22s, respectively.

The width W of the internal wall 22 is preferably greater than or equal to 0.5 mm and less than or equal to 30 mm, and more preferably less than or equal to 10 mm. The electrolyte is supplied along the flow path C. For this reason, it is possible to relatively increase the width of the flow path C by decreasing the width of the internal wall 22. In the case where the width of the flow path C increases, it is possible to prevent an occurrence of turbulent flows.

The internal walls 22 form a flow path for a flow of the electrolyte. For this reason, it is possible to ensure sufficient strength by designing the internal wall 22 to have a certain level of thickness. As a result, there are advantages such as being easily processed.


"Electrode"


FIG. 6 is a schematic cross-sectional view as the redox flow battery of the first embodiment is cut along the A-A plane in FIG. 2.

A conductive sheet containing carbon fibers can be used as the electrode 30. The carbon fiber referred herein is fibrous carbon, and examples of the fibrous carbon include carbon fibers and carbon nanotubes. In the case where the electrode 30 contains carbon fibers, a contact area between the electrolyte and the electrode 30 increases, and the reactivity of the redox flow battery 100 increases.

Particularly, in the case where the electrode 30 contains carbon nanotubes having a diameter of less than or equal to 1 $\mu$m, a fiber diameter of the carbon nanotubes is small, and thus it is possible to increase the contact area between the electrolyte and the electrode 30. On the other hand, in the case where the electrode 30 contains carbon fibers having a diameter of greater than or equal to 1 $\mu$m, the conductive sheet becomes strong, and it becomes difficult to break the conductive sheet. For example, a carbon felt, a carbon paper, or a carbon-nanotube sheet can be used as the conductive sheet containing carbon fibers.

A layer of the electrode 30 may be provided in the stacking direction, or a plurality of layers of the electrodes 30 may be provided in the stacking direction. For example, as shown in FIG. 6, the electrode 30 may include the first electrode 31, the second electrode 32, and the liquid outlet layer 33 which are sequentially disposed from the side of the collector plate 20.

The first electrode 31 is fitted into the recessed region 20A of the collector plate 20, and is present closer to the collector plate 20 than a first surface 21a of the peripheral edge wall 21. In detail, the first electrode 31 is fitted into a region which is surrounded by a side surface of the peripheral edge wall 21 and the first surfaces 22a of the internal walls 22 in the recessed region 20A. The first surface 21a of the peripheral edge wall 21 is also referred to as a surface that is positioned toward the stacking direction, and faces the electrode 30 or the ion-exchange membrane 10. The second electrode 32 is disposed closer to the ion-exchange membrane 10 than the first surface 21a of the peripheral edge wall 21, and stretches throughout a region surrounded by the cell frame 40. The liquid outlet layer 33 stretches throughout the region surrounded by the cell frame 40, and the liquid outlet layer 33 preferably allows the electrolyte to flow therethrough more easily than the second electrode 32. The liquid outlet layer 33 may be a porous sheet having a large number of holes for permeation of liquid, and may not necessarily have conductivity.

As described above, a predetermined shape is provided in the first surface 22a of the internal wall 22 of the redox flow battery of the embodiment. For this reason, the electrolyte is easily supplied to the first region D3 directly above the internal wall 22. As a result, it is possible to decrease a difference in the state of electrolyte supply between the first region D3 directly above the internal wall 22 and a second region D4 between two internal walls 22.

The first electrode 31 preferably has a liquid permeability greater than that of the second electrode 32. In the case where the liquid permeability of the first electrode 31 is greater than that of the second electrode 32, a flow of the electrolyte having flown into the electrode compartment K is restricted by the second electrode 32, and the electrolyte diffuses in the in-plane direction. In the case where the electrolyte diffuses throughout the recessed region 20A in the in-plane direction, the electrolyte flows to the entire surface of the second electrode 32 more uniformly and easily.

The liquid outlet layer 33 is porous, and the electrolyte having flown out from the second electrode 32 is guided to the exhaust path by the liquid outlet layer 33. For this reason, the liquid outlet layer 33 preferably has a liquid permeability greater than that of the second electrode 32. In the case where the liquid permeability of the liquid outlet layer 33 in the in-plane direction is greater than that of the second electrode 32 in the stacking direction, a difference in a flow of the electrolyte in a part of the second electrode 32 in the vicinity of the exhaust path 23 becomes small. As a result, charge and discharge reactions can occur on the entire surface of the second electrode 32, and the cell resistance decreases. In the case where the liquid outlet layer 33 is made from a conductive material, and serves as an electrode (third electrode) which is a part of the electrode 30, the cell resistance further decreases. The materials provided as exemplary examples of the first electrode 31 can be used as the conductive material.

The liquid permeability can be evaluated by a Darcy's law permeability (hereinbelow, may be simply referred to as a permeability). Typically, the Darcy's law is used to represent the permeability of a porous medium, and is also applied to members other than porous materials for the sake of convenience. In a non-uniform and anisotropic member, a permeability in a direction where the lowest permeability is observed is adopted.

A Darcy's law permeability k (m$^2$) is calculated based on a relationship with a permeation flux (m/sec) of a liquid which is represented by the following equation where when the liquid having a viscosity $\mu$ (Pa·sec) permeates through a member having a cross-sectional area S (m$^2$) and a length L (m) at a flow rate Q (m$^3$/sec), a pressure difference between a liquid inlet side and a liquid outlet side of the member is represented as $\Delta$P (Pa).

$$\frac{Q}{S} = \frac{k}{\mu} \times \frac{\Delta P}{L} \qquad \cdots (1)$$

The permeability of the first electrode 31 is preferably greater than or equal to 100 times, more preferably greater than or equal to 300 times, and further more preferably greater than or equal to 1,000 times that of the second electrode 32. For a specific example where the above-described relationship can be realized, the first electrode 31 is made from a carbon felt or a carbon paper which contains carbon fibers having a fiber diameter of greater than or equal to 1 $\mu$m, and the second electrode 32 is made from a carbon-nanotube sheet which contains carbon nanotubes having a fiber diameter of less than or equal to 1 $\mu$m. The permeability of the first electrode 31 represents a permeability in the in-plane direction, and the permeability of the second electrode 32 represents a permeability in the stacking direction (normal direction of the in-plane direction).

The liquid outlet layer 33 preferably has a liquid permeability greater than that of the second electrode 32. The reason is that the electrolyte having passed through the second electrode 32 is required to be quickly exhausted to the exhaust path 23. The permeability of the liquid outlet layer 33 is preferably greater than or equal to 50 times, more preferably greater than or equal to 100 times, further more preferably greater than or equal to 300 times, and particularly preferably greater than or equal to 1,000 times that of the second electrode 32. For a specific example where the above-described relationship can be realized, the materials provided as exemplary examples of the first electrode 31 can be used as the material of the liquid outlet layer 33. The permeability of the liquid outlet layer 33 represents a permeability in the in-plane direction.

"Operation of Redox Flow Battery"

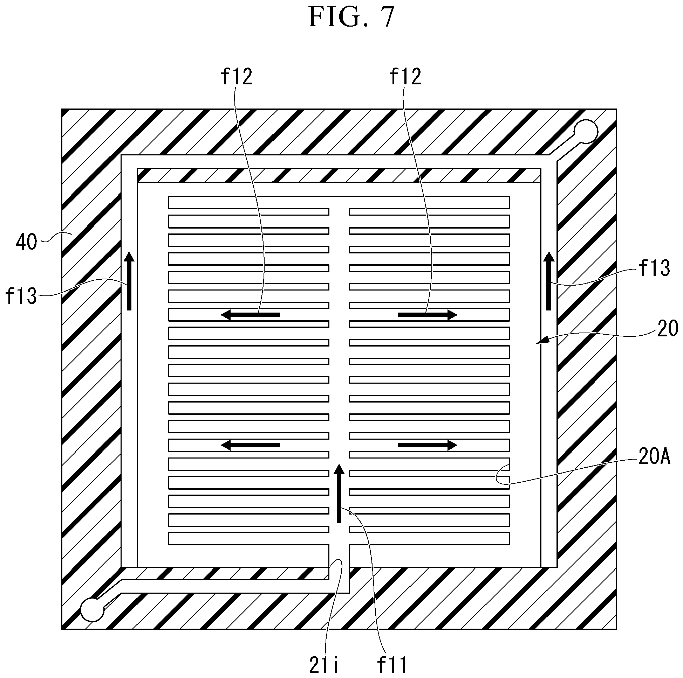

An example of an operation of the redox flow battery 100 will be described with reference to FIG. 7. FIG. 7 is a view showing a flow of the electrolyte in the redox flow battery 100 of the first embodiment.

The electrolyte is supplied into the electrode compartment K of the redox flow battery 100 from an inlet port provided in the cell frame 40. The electrolyte supplied into the electrode compartment K reacts with the electrode 30 in the electrode compartment K. Ions occurring at the reactions flow between the electrodes 30 via the ion-exchange membrane 10, and charge and discharge occurs. The electrolyte after the reactions is exhausted from an outlet port provided in the cell frame 40.

The electrolyte is supplied from the opening portion 21i of the peripheral edge wall 21 into the recessed region 20A in the electrode compartment K (flow f11). The supplied electrolyte flows along the internal walls 22, and diffuses in the recessed region 20A in the in-plane direction (flow f12). Then the electrolyte passes through the electrode 30, and is exhausted from the exhaust path 23 (flow f13).

As described above, in the redox flow battery of the embodiment, a flow of the electrolyte is controlled, and the electrolyte can be supplied to the entire surface of the electrode in the in-plane direction. As a result, it is possible to use the entire surface of the electrode for reactions, and it is possible to decrease the cell resistance of the redox flow battery.

A preferred embodiment of the present invention has been described above in detail, and the present invention is not limited to a specific embodiment. Various modifications and changes can be made without departing from the features of the present invention described in the claims.

Industrial Applicability

In the collector plate and the redox flow battery of the present invention, the electrolyte can diffuse to the entire surface of the electrode in the in-plane direction. For this reason, it is possible to use the entire surface of the electrode to the maximum at charging and discharging. Therefore, the present invention can be preferably applied to a redox flow battery of a high-capacity storage battery.

Explanation of Reference Signs

| 10: | ion-exchange membrane |
|---|---|
| 20: | collector plate |
| 20A: | recessed region |
| 21: | peripheral edge wall |
| 21a: | first surface of peripheral edge wall |
| 21i: | opening portion |
| 22: | internal wall |
| 22a: | first surface of internal wall |
| 22s: | diffusion promoting groove |
| 23: | exhaust path |
| 30: | electrode |
| 31: | first electrode |
| 32: | second electrode |
| 33: | liquid outlet layer |
| 40: | cell frame |
| 100: | redox flow battery |
| CE: | single cell |
| K: | electrode compartment |
| C: | flow path |
| C1: | first flow path |
| C2: | second flow path |
| W: | width of internal wall |

**Claims**

**1.** A collector plate comprising:

a plurality of flow paths through which an electrolyte is capable of flowing, and which are provided in at least one surface of the collector plate,
wherein a surface roughness (RaT) of a first surface of an internal wall regulated between the plurality of flow paths, which is measured along a width direction of the internal wall, is smaller than a surface roughness (RaL) of the first surface which is measured along a length direction of the internal wall.

**2.** The collector plate according to claim 1,
wherein the surface roughness (RaT) of the first surface of the internal wall, which is measured along the width direction of the internal wall, is in a range of 0.1 $\mu$m to 10 $\mu$m.

**3.** The collector plate according to claim 1 or 2,
wherein protrusions and recessions are provided in the first surface of the internal wall to promote a flow of the electrolyte, and the protrusions and recessions are formed in a direction intersecting the width direction of the internal wall.

4. The collector plate according to claim 3,
   wherein the protrusions and recessions are a plurality of diffusion promoting grooves extending in the width direction of the internal wall.

5. The collector plate according to claim 4,
   wherein a depth of the diffusion promoting groove is in a range of 50 $\mu$m to 500 $\mu$m.

6. The collector plate according to claim 4 or 5,
   wherein a width of the diffusion promoting groove is in a range of 50 $\mu$m to 500 $\mu$m.

7. A redox flow battery comprising:

   an ion-exchange membrane;
   the collector plate according to any one of claims 1 to 6; and
   electrodes disposed between the ion-exchange membrane and the current collector,
   wherein the collector plate is disposed in such a manner that the first surface faces the electrode.

# FIG. 1

# FIG. 2

# FIG. 3

FIG. 4

# FIG. 5

21a

21

22s

22

22a

22

# FIG. 6

21    30

21a    10    31 32 33    D3

D4

21    23

40    20    20A    22a    22    C    40

# FIG. 7

# FIG. 8

(a)

(b)

## INTERNATIONAL SEARCH REPORT

| International application No. |
|---|
| PCT/JP2017/043791 |

**A. CLASSIFICATION OF SUBJECT MATTER**
Int.Cl. H01M8/026(2016.01)i, H01M8/10(2016.01)i, H01M8/18(2006.01)i

According to International Patent Classification (IPC) or to both national classification and IPC

**B. FIELDS SEARCHED**

Minimum documentation searched (classification system followed by classification symbols)
Int.Cl. H01M8/026, H01M8/10, H01M8/18

Documentation searched other than minimum documentation to the extent that such documents are included in the fields searched
Published examined utility model applications of Japan 1922-1996
Published unexamined utility model applications of Japan 1971-2017
Registered utility model specifications of Japan 1996-2017
Published registered utility model applications of Japan 1994-2017

Electronic data base consulted during the international search (name of data base and, where practicable, search terms used)
Japio-GPG/FX & キーワード：レドックスフロー, 表面粗さ

**C. DOCUMENTS CONSIDERED TO BE RELEVANT**

| Category* | Citation of document, with indication, where appropriate, of the relevant passages | Relevant to claim No. |
|---|---|---|
| A | WO 2014/109957 A1 (GRAFTECH INTERNATIONAL HOLDINGS INC.) 17 July 2014, claims, paragraphs [0021], [0026] (Family: none) | 1-7 |
| A | JP 2015-122231 A (SUMITOMO ELECTRIC INDUSTRIES, LTD.) 02 July 2015, claims, paragraphs [0058]-[0061], fig. 1, 2 (Family: none) | 1-7 |
| A | JP 11-297338 A (NISSHINBO HOLDINGS INC.) 29 October 1999, claims, paragraph [0006] & EP 949704 A1, claims, paragraph [0006] & US 6348279 B1 & CA 2268423 A1 | 1-7 |

☒ Further documents are listed in the continuation of Box C.　　☐ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 25 December 2017 | 16 January 2018 |

| Name and mailing address of the ISA/ Japan Patent Office 3-4-3, Kasumigaseki, Chiyoda-ku, Tokyo 100-8915, Japan | Authorized officer |
|---|---|
| | Telephone No. |

Form PCT/ISA/210 (second sheet) (January 2015)

**INTERNATIONAL SEARCH REPORT**

| International application No. |
| --- |
| PCT/JP2017/043791 |

C (Continuation).  DOCUMENTS CONSIDERED TO BE RELEVANT

| Category* | Citation of document, with indication, where appropriate, of the relevant passages | Relevant to claim No. |
| --- | --- | --- |
| A | JP 2007-149467 A (MATSUSHITA ELECTRIC WORKS LTD.) 14 June 2007, claims, paragraph [0016] (Family: none) | 1-7 |
| A | JP 2-148659 A (TOYOBO CO., LTD.) 07 June 1990, embodiment 1 (Family: none) | 1-7 |
| A | JP 2003-157885 A (SUMITOMO ELECTRIC INDUSTRIES, LTD.) 30 May 2003, paragraph [0034] (Family: none) | 1-7 |
| A | JP 2002-246035 A (SUMITOMO ELECTRIC INDUSTRIES, LTD.) 30 August 2002, paragraph [0059] (Family: none) | 1-7 |

Form PCT/ISA/210 (continuation of second sheet) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2016236720 A
- JP 2015122231 A
- JP 2015505147 W